# EUROPEAN PATENT SPECIFICATION

(11) **EP 1 541 427 B1**
(45) Date of publication and mention of the grant of the patent: **25.02.2009**
(21) Application number: 04028468.9
(22) Date of filing: 01.12.2004
(51) Int. Cl.: B60R 21/16

(54) **Knee airbag and occupant's leg protection system**
Knieairbag und Schutzsystem für die Beine des Passagiers
Sac gonflable pour genoux et système de protection pour le genoux du passager

(30) Priority: 12.12.2003 JP 2003415191
(43) Date of publication of application: 15.06.2005
(73) Proprietor: TAKATA CORPORATION, Minato-ku, Tokyo 106-8510 (JP)
(72) Inventor: Abe, Kazuhiro, Minato-ku Tokyo 106-8510 (JP); Kumagai, Masayoshi, Minato-ku Tokyo 106-8510 (JP); Murakami, Yoshiki, Minato-ku Tokyo 106-8510 (JP)
(74) Representative: Vossius & Partner

(56) References cited:
- EP-A- 1 310 408
- EP-A- 1 314 617
- EP-A- 1 350 689
- US-A- 6 155 595

## Description

The present invention relates to a knee airbag for restraining the movement of the lower body of an occupant toward the front of a vehicle by restricting the movement of knees to prevent the lower legs of the occupant from striking against an interior panel etc. ahead of a seat in the event of a collision of the vehicle and it relates to an occupant's leg protection system including the knee airbag.

There is an occupant's leg protection system for protecting the lower legs of an occupant from striking against the interior panel ahead of a seat to receive a large load in the event of a head-on collision of a highspeed mobile unit such as a car, which includes a knee airbag that is to be inflated toward the front of the occupant's legs and an inflator (gas generator) for inflating the knee airbag.

It is described in JP-A-2003-182504 (Patent Document 1) to provide a knee airbag constructed to be inflated from below upward in front of occupant's legs. The knee airbag is shaped such that the width of the lower part in lateral directions (hereinafter, also referred to as a lateral width) is smaller at the lower part, in which gas from an inflator is diffused by a diffuser in the lateral directions in the knee airbag, and which includes a tether that joins the base fabric of the knee airbag adjacent to the occupant and the base fabric adjacent to an instrument panel (interior panel) together, and in which the tether is disposed vertically in multistage.

The tethers disclosed in JP-A-2003-182504 are constructed such that the uppermost tether has the smallest width. Thus the outline of the uppermost chamber in the knee airbag is not clear and as such, this may delay completion of inflation of the uppermost chamber.

EP 1 314 617 A describes a knee airbag according to the preamble of claim 1.

Accordingly, it is an object of the present invention to provide a knee airbag that is disposed vertically and laterally quickly and an occupant's leg protection system including the knee airbag.

An airbag according to the present invention (Claim 1) is an knee airbag to be inflated toward the front of the legs of a vehicle occupant. The knee airbag is to be inflated from below upward, of which the upper part constituting an equal-width portion having a substantially equal lateral width. The part lower than the equal-width portion has a smaller width at the lower part. Continuous tethers extending laterally are provided vertically in multistages in the knee airbag, the upper tether being longer laterally. Vent spaces are formed between the respective lateral ends of the tethers and the lateral edges of the knee airbag. The uppermost tether is located in the vicinity of the boundary between the equal-width portion and the narrow-width portion or above the boundary.

The knee airbag according to claim 1 may further comprise a diffuser for directing gas from an inflator for inflating the knee airbag only in the lateral directions in the knee airbag is provided at the lower part of the knee airbag (claim 2).

The knee airbag according to claim 1 or 2 may be further defined in that, when inflated, the vent spaces each having a flow-channel cross section of 3,000 mm² to 7,850 mm² are formed between the respective lateral ends of the tethers and the edges of the knee airbag.

An occupant's leg protection system according to the invention (Claim 4) includes the knee airbag according to the invention (claims 1, 2 or 3) and an inflator for inflating the knee airbag.

In the knee airbag and the occupant's leg protection system according to the present invention, when the knee airbag is inflated by the gas from the inflator, the gas flows upward through the vent spaces between the both ends of the tethers and the lateral edges of the knee airbag to inflate the uppermost chamber. The lateral width of the lower part of the knee airbag is smaller at the lower part (in other words, the lateral width is larger at the upper part).

Accordingly, at inflation, the knee airbag is inflated upward while expanding laterally, then the upper part of the knee airbag is inflated so as to connect inflated portions of the lateral edges to extend laterally, and then the vicinity of the center of the knee airbag is inflated.

Of the tethers of the knee airbag, the uppermost tether has the largest lateral width and is located in the vicinity of the boundary between the equal-width portion and the narrow-width portion or above the boundary portion, and the uppermost chamber of the knee airbag is relatively small in volume. Accordingly the uppermost chamber of the knee airbag is inflated quickly.

Thus, according to the invention, the lateral sides and the upper part of the knee airbag are inflated quickly to be deployed laterally and upward rapidly.

According to claim 2, the gas from the inflator is directed laterally. Therefore, the knee airbag is deployed laterally more quickly.

According to claim 3, the gas from the inflator flows upward along the edges of the knee airbag quickly. Therefore, the knee airbag is inflated extremely quickly.

An embodiment of the present invention will be described hereinbelow with reference to the drawings.
Fig. 1 is a cross-sectional view of the vicinity ahead of a vehicle seat showing the inflated state of a knee airbag according to an embodiment of the present invention;
Fig. 2(a) is a front view of the knee airbag of Fig. 1, showing the inflated state thereof;
Fig. 2(b) is a cross-sectional view taken along line B-B of Fig. 2(a);
Fig. 3 is a cross-sectional view taken along line III-III of Fig. 2(b); and
Fig. 4 is a cross-sectional view taken along line IV-IV of Fig. 1.
In the following description, a lateral direction means a direction along the width of a vehicle.

An occupant's leg protection system 14 is mounted to an interior panel 10 ahead of a seat 12.

The occupant's leg protection system 14 includes a container-like retainer 16 that is open in the front (a surface adjacent to an occupant), a knee airbag 18 connected to the retainer 16, an inflator (gas generator) 20 for inflating the knee airbag 18, and a diffuser 22 disposed in the knee airbag 18 for directing the gas flow laterally in the knee airbag 18.

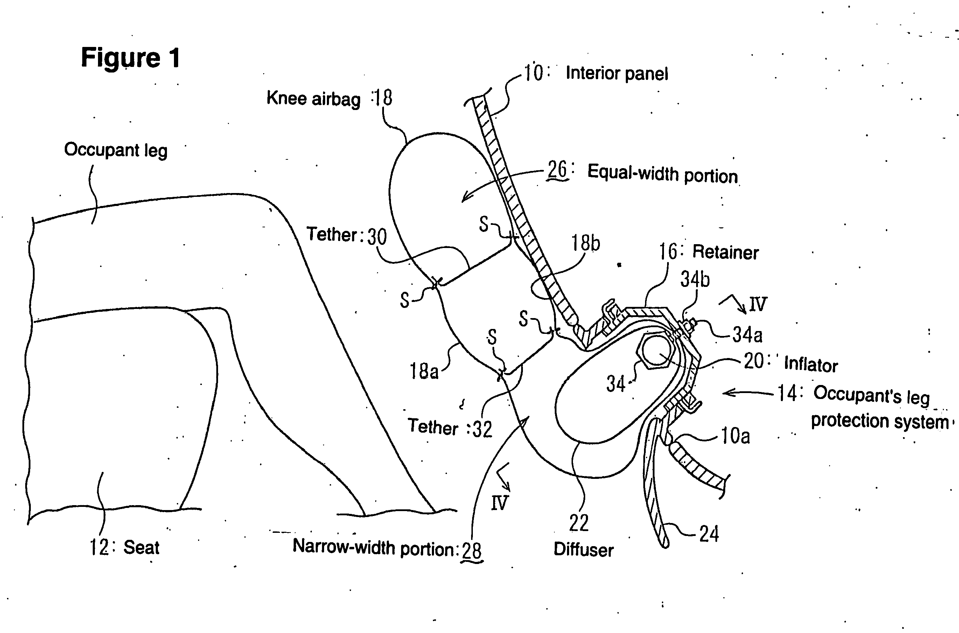

The retainer 16 is disposed in an opening 10a of the interior panel 10. The knee airbag 18 and the diffuser 22 are usually accommodated in an folded state in the retainer 16. A lid 24 is attached to the front surface of the retainer 16 such that it covers the folded knee airbag 18. The lid 24 is usually disposed so as to be substantially flush with the interior panel 10 and, when the knee airbag 18 is inflated, the lid 24 is open to the front surface of the interior panel 10 with the lower end as fulcrum, as shown in Fig. 1.

As shown in Fig. 1, the opening 10a is provided lower than the seating surface of the seat 12. The knee airbag 18 is inflated from below upward along the front surface (a surface adjacent to the occupant) of the interior panel 10 from the opening 10a.

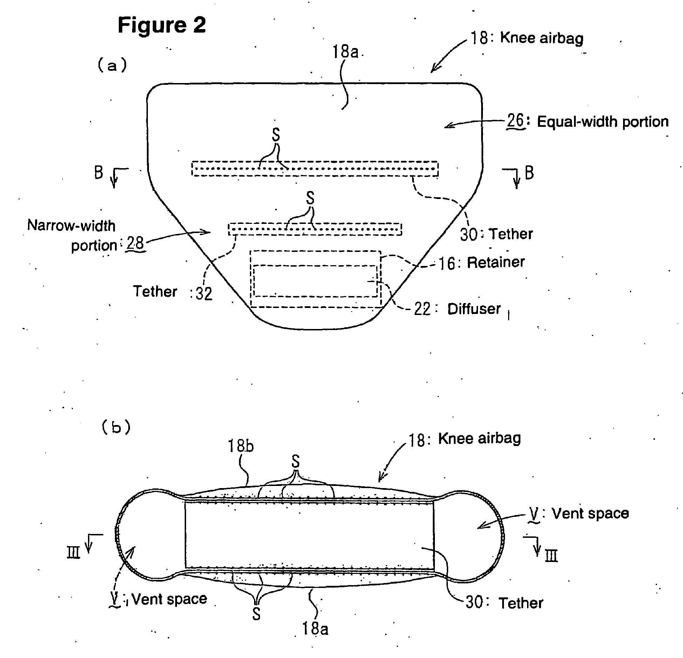

Referring to Fig. 2, the upper part of the knee airbag 18 constitutes an equal-width portion 26 of which the lateral width is substantially equal across a predetermined vertical width. The part of the knee airbag 18 lower than the equal-width portion 26 constitutes a narrow-width portion 28 of which the lateral width is smaller at the lower part. The lower end of the narrow-width portion 28 is connected to the retainer 16.

The equal-width portion 26 is disposed such that it is located above the seating surface of the seat 12 when the knee airbag 18 is inflated from below upward along the front surface of the interior panel 10 through the opening 10a. Therefore, when the knee airbag 18 is inflated toward the front of occupant's legs, the equal-width portion 26 faces the vicinity of the knees of the occupant seated in the seat 12.

The lateral width of the equal-width portion 26 is preferably in the range from 500 mm to 600 mm. The lateral width of the front opening of the retainer 16 is preferably at most one-half, particularly from 40% to 50% of the width of the equal-width portion 26.

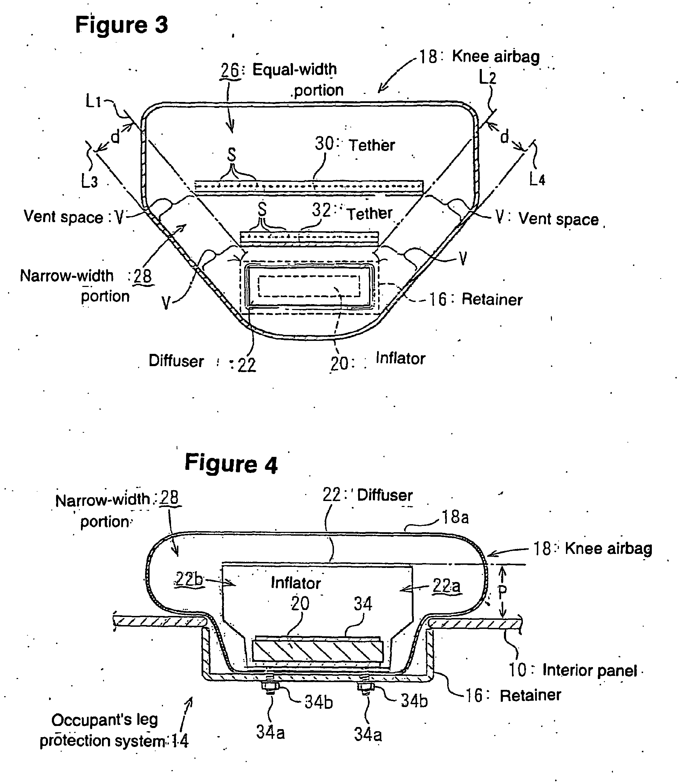

Referring to Fig. 4, the narrow-width portion 28 preferably extends such that the lateral edges thereof connect the lateral edges of the equal-width portion 26 with the lateral lower corners of the front opening of the retainer 16, respectively.

The knee airbag 18 has tethers 30 and 32 that connect the front surface (a base fabric adjacent to the occupant) 18a of the knee airbag 18 and the rear surface (a base fabric adjacent to the interior panel 10) 18b in multistages (two stages in this embodiment). Symbol S denotes seams that connect the tethers 30 and 32 with the front surface 18a and the rear surface 18b, respectively. The upper tether 30 is disposed in the vicinity of the boundary between the equal-width portion 26 and the narrow-width portion 28 or at a position slightly upper than that (preferably, in the range of 0 mm to 70 mm above the boundary between the equal-width portion 26 and the narrow-width portion 28). The lower tether 32 is disposed in the vertical middle of the narrow-width portion 28.

The tethers 30 and 32 extend in the lateral directions and connect to the front surface 18a and the rear surface 18b across a predetermined lateral width. As shown in Fig. 2(b), the respective lateral ends of the tethers 30 and 32 are separated from the lateral edges of the knee airbag 18. Between the lateral ends of the tethers 30 and 32 and the lateral edges of the knee airbag 18, vent spaces V are formed, respectively.

The cross section of the flow channel of each vent space V is preferably in the range from 3,000 mm² to 7,850 mm², more preferably, from 4,500 m² to 5,500 mm². In that case, the interval (the shortest distance) between the respective both ends of the tethers 30 and 32 and the lateral edges of the knee airbag 18 is preferably in the range from 80 mm to 130 mm, more preferably, from 90 mm to 120 mm.

In the invention, particularly, as shown in Fig. 3, line L₁ that connects the left ends of the tethers 30 and 32 together and line L₂ that connects the right ends together are parallel to lines L₃ and L₄ that extend along the lateral edges of the narrow-width portion 28, respectively, and the distances d between the lines L1 and L3 and between the lines L2 and L4 are preferably in the range from 80 mm to 130 mm, more preferably, from 90 mm to 120 mm. With such a structure, gas from the inflator 20 flows quickly upward along the lateral edges of the narrow-width portion 28 through the vent spaces V.

The diffuser 22 is disposed in the narrow-width portion 28. The inflator 20 is disposed in the diffuser 22. According to the embodiment, the diffuser 22 is constructed such that a heat-resistance soft fabric or synthetic resin is formed in cylindrical shape by stitching, of which the openings 22a and 22b at the opposite ends are disposed so as to be open in the lateral directions. Therefore, when the inflator 20 emits a jet of gas in the diffuser 22, the gas from the inflator 20 is directed only laterally through the openings 22a and 22b.

In the embodiment, the diffuser 22 has a size that allows it to be inflated so as to project forward (toward the occupant) relative to the front surface of the interior panel 10 in the knee airbag 18, shown in Fig. 4, by the pressure of the gas emitted from the inflator 20 in the diffuser 22. The size of the diffuser 22 is preferably set such that the projection length P (see Fig. 4) of the diffuser 22 from the front surface of the interior panel 10 is in the range from 60 mm to 100 mm, or the areas of the openings 22a and 22b projecting from the front surface of the interior panel 10 and exposed into the knee airbag 18 are in the range from 3,000 mm² to 7,850 mm².

The inflator 20 of this embodiment is shaped like a rod and disposed in the diffuser 22 such that the longitudinal direction is the lateral direction. The inflator 20 has gas ports (not shown) in the side circumference thereof.

The inflator 20 is mounted to an inflator holder 34. The inflator holder 34 includes a base portion and a band portion (the reference numerals are omitted) which fixes the inflator 20 to the base portion. Stud bolts 34a project from the base portion.

The stud bolts 34a are inserted into bolt insertion holes (the reference numerals are omitted) provided in the rear surface of the diffuser 22 (opposite to the occupant) and the rear surface 18b at the lower end of the narrow-width portion 28 to project to the back of the knee airbag 18 (opposite to the occupant) and further inserted into bolt insertion holes (the reference numerals are omitted) provided in the retainer 16. Nuts 34b are fastened to the stud bolts 34a, so that the inflator holder 34 is fixed in the retainer 16 and the rear surface of the diffuser 22 and the rear surface 18b at the lower end of the narrow-width portion 28 are retained between the inflator holder 34 and the retainer 16.

When a vehicle equipped with the occupant's leg protection system 14 with such a structure collides at the front, the inflator 20 emits a jet of gas and so the knee airbag 18 starts to be inflated by the gas from the inflator 20. The knee airbag 18 pushes the lid 24 open to be inflated toward the front of the interior panel 10 and is deployed upward along the interior panel 10. The equal-width portion 26 at the upper part of the inflated knee airbag 18 faces the vicinity of occupant's knees and receives them.

In the occupant's leg protection system 14, the knee airbag 18 has a shape in which the lower narrow-width portion 28 is smaller in lateral width at the lower part, or an upward expanding shape, and the gas from the inflator 20 disposed at the lower end of the narrow-width portion 28 flows upward through the vent spaces V between the lateral ends of the tethers 30 and 32 and the lateral edges of the narrow-width portion 28. Therefore, at the inflation of the knee airbag 18, the narrow-width portion 28 first is inflated while expanding upward and laterally, then the equal-width portion 26 above the narrow-width portion 28 is inflated to extend laterally so as to connect the inflated portions of the lateral sides of the narrow-width portion 28 together, and then the vicinity of the center of the knee airbag 18 is inflated.

The upper tether 30 is disposed in the vicinity of the boundary between the equal-width portion 26 and the narrow-width portion 28 or at a position upper than that and has a large lateral width. The equal-width portion 26 has a relatively small volume and so the equal-width portion 26 is inflated rapidly.

Accordingly, the lateral sides and the upper equal- width portion 26 of the knee airbag 18 are inflated quickly, so that the knee airbag 18 is inflated laterally and upward quickly.

According to the embodiment, since the diffuser 22 that directs the gas flow from the inflator 20 laterally is provided, the knee airbag 18 is deployed laterally extremely quickly.

According to the embodiment, when the knee airbag 18 is inflated, the diffuser 22 projects from the front surface of the interior panel 10 forward by 60 mm to 100 mm in the knee airbag 18 by the pressure of the gas emitted from the inflator 20. Therefore, the gas from the inflator 20 is emitted laterally from the lateral openings 22a and 22b of the diffuser 22 without striking against the inner surface of the knee airbag 18 to change the directions. Accordingly, the gas from the inflator 20 can be effectively directed laterally.

In this embodiment, the cross section of the flow channel of each of the vent spaces V between the both ends of the tethers 30 and 32 and the lateral edges of the narrow-width portion 28 is in the range from 3,000 mm² to 7,850 mm². Thus, the gas flows upward quickly in the vent spaces V. Accordingly, the knee airbag 18 is inflated extremely rapidly.

The above-described embodiment is only an example of the invention; the invention is not limited to that.

## Claims

1. A knee airbag (18) to be inflated toward the front of the legs of a vehicle occupant, wherein
the knee airbag (18) is to be inflated from below upward, of which the upper part constituting an equal-width portion (26) having a substantially equal lateral width; and
the part (28) lower than the equal-width portion (26) has a smaller width at the lower part, wherein
continuous tethers (30, 32) extending laterally are provided vertically in multistage in the knee airbag, the upper tether (30) being longer laterally; than the lower tether (32);
vent spaces (V) are formed between the respective lateral ends of the tethers (30, 32) and the lateral edges of the knee airbag (18); and
the uppermost tether (30) is located in the vicinity of the boundary between the equal-width portion (26) and the narrow-width portion (28) or above the boundary,
**characterized in that** a first line (L₁) connecting the first ends of the tethers (30, 32) is parallel to a first lateral edge (line L₃) and a second line (L₂) connecting the second ends of the tethers (30, 32) is parallel to a second lateral edge (line L₄).

2. The knee airbag according to Claim 1, wherein a diffuser (22) is provided at the lower part of the knee airbag and is adapted to direct gas from an inflator (20) into the knee airbag for inflating the knee airbag (18) only laterally.

3. The knee airbag according to claim 1 or 2, when inflated, the vent spaces (V) each having a flow-channel cross section of 3,000 mm² to 7,850 mm² are formed between the respective lateral ends of the tethers (30, 32) and the edges of the knee airbag.

4. An occupant's leg protection system (17) comprising a knee airbag (18) according to claim 1, 2 or 3 to be inflated toward the front of the legs of a vehicle occupant and an inflator (20) for inflating the knee airbag.

## Patentansprüche

1. Knieairbag (18), der zur Vorderseite der Beine des Fahrzeuginsassen hin aufgeblasen werden kann, wobei
der Knieairbag (18) von unten nach oben aufgeblasen wird, wobei der obere Teil einen gleich-breiten Abschnitt (26) mit einer im Wesentlichen gleichen lateralen Breite bildet; und
der Teil (28), der unterhalb des gleich-breiten Abschnitts (26) ist, im unteren Bereich eine geringere Breite hat, wobei
die in Querrichtung sich ersteckenden, durchgehenden Haltegurte (30, 32) vertikal mehrstufig in dem Knieairbag ausgebildet sind und der obere Haltegurt (30) in Querrichtung länger ist als der untere Haltegurt (32);
Luftauslass-Öffnungen (V) zwischen den entsprechenden lateralen Enden der Haltegurte (30, 32) und den lateralen Rändern des Knieairbags (18) ausgebildet sind; und
der oberste Haltegurt (30) in der Umgebung der Abgrenzung zwischen dem gleich-breiten Abschnitt (26) und dem Abschnitt (28) mit geringerer Breite oder oberhalb der Abgrenzung angeordnet ist,
**dadurch gekennzeichnet, dass**
eine erste Linie (L₁), die die ersten Enden der Haltegurte (30, 32) verbindet, parallel zu einem ersten lateralen Rand (Linie L₃) ist und eine zweite Linie (L₂), die die zweiten Enden der Haltegurte (30, 32) verbindet, parallel zu einem zweiten lateralen Rand (Linie L₄) ist.

2. Knieairbag nach Anspruch 1, wobei ein Diffusor (22) an dem unteren Teil des Knieairbags vorgesehen und zum Lenken des Gases aus einem Gasgenerator (20) in den Knieairbag hinein zum nur lateralen Aufblasen des Knieairbags (18) eingerichtet ist.

3. Knieairbag nach Anspruch 1 oder 2, wobei im aufgeblasenen Zustand, jede der Luftauslass-Öffnungen (V) einen Strömungskanal-Querschnitt von 3000 mm² bis 7850 mm² hat, die zwischen den entsprechenden lateralen Enden der Haltegurte (30, 32) und den Rändern des Knieairbags ausgebildet sind.

4. Schutzsystem (17) für das Bein des Passagiers, mit einem Knieairbag (18) nach einem der Ansprüche 1, 2 oder 3, der zur Vorderseite der Beine des Fahrzeuginsassen hin aufgeblasen wird, und einem Gasgenerator (20) zum Aufblasen des Knieairbags.

## Revendications

1. Coussin de sécurité gonflable pour genoux (18) destiné à être gonflé vers l'avant des jambes d'un occupant de véhicule, dans lequel :
◆ le coussin de sécurité gonflable pour genoux (18) doit être gonflé de dessous vers le haut, dont la partie supérieure constitue une partie à largeur égale (26) ayant une largeur latérale sensiblement égale ; et
◆ la partie inférieure (28) différente de la partie à largeur égale (26) a une plus petite largeur au niveau de la partie inférieure, dans lequel :
◆ des amarres continues (30, 32) s'étendant latéralement, sont prévues verticalement sur plusieurs étages dans le coussin de sécurité gonflable pour genoux, l'amarre supérieure (30) étant plus longue latéralement que l'amarre inférieure (32) ;
◆ des espaces d'évacuation (V) sont formés entre les extrémités latérales respectives des amarres (30, 32) et les bords latéraux du coussin de sécurité gonflable pour genoux (18) ; et
◆ l'amarre la plus haute (30) est située à proximité de la limite entre la partie à largeur égale (26) et la partie à largeur étroite (28) ou au-dessus de la limite,
**caractérisé en ce qu'**une première ligne (L1) raccordant les premières extrémités des amarres (30, 32) est parallèle à un premier bord latéral (ligne L3) et une seconde ligne (L2) raccordant les secondes extrémités des amarres (30, 32) est paralèlle à un second bord latéral (ligne L4).

2. Coussin de sécurité gonflable pour genoux selon la revendication 1, dans lequel un diffuseur (22) est prévu au niveau de la partie inférieure du coussin de sécurité gonflable pour genoux et est adapté pour diriger le gaz d'un gonfleur (20) dans le coussin de sécurité pour genoux afin de gonfler le coussin de sécurité pour genoux (18) uniquement latéralement.

3. Coussin de sécurité gonflable pour genoux selon la revendication 1 ou 2, lorsqu'il est gonflé, les espaces d'évacuation (V) ayant chacun une section transversale de canal d'écoulement de l'ordre de 3 000 mm² 2 à 7 850 mm² sont formés entre les extrémités latérales respectives des amarres (30, 32) et les bords du coussin de sécurité gonflable pour genoux.

4. Système de protection de jambes (17) pour un occupant, comprenant un coussin de sécurité pour genoux (18) selon la revendication 1, 2 ou 3, destiné à être gonflé vers l'avant des jambes d'un occupant de véhicule et un gonfleur (20) pour gonfler le coussin de sécurité gonflable pour genoux.
